Europäisches Patentamt

European Patent Office

Office européen des brevets

(19)

(11) Veröffentlichungsnummer : **0 351 595 B1**

## (12) EUROPÄISCHE PATENTSCHRIFT

(45) Veröffentlichungstag der Patentschrift :
**27.05.92 Patentblatt 92/22**

(21) Anmeldenummer : **89111650.1**

(22) Anmeldetag : **27.06.89**

(51) Int. Cl.⁵ : **G01B 21/04, B23Q 1/00**

---

(54) **Gekapselte Positionsmesseinrichtung.**

---

(30) Priorität : **16.07.88 DE 3824188**

(43) Veröffentlichungstag der Anmeldung :
**24.01.90 Patentblatt 90/04**

(45) Bekanntmachung des Hinweises auf die
Patenterteilung :
**27.05.92 Patentblatt 92/22**

(84) Benannte Vertragsstaaten :
**DE**

(56) Entgegenhaltungen :
**EP-A- 0 113 305**
**DE-U- 8 536 525**
**US-A- 4 742 299**

(56) Entgegenhaltungen :
**PATENT ABSTRACTS OF JAPAN Band 10, Nr.**
**274 (P-498)(2330), 18. September 1986; & JP-**
**A-6196437 (FUJITSU LTD.) 15.05.1986**
**PATENT ABSTRACTS OF JAPAN Band 11, Nr.**
**84 (P-556)(2531), 13. März 1987; & JP-**
**A-61239202 (SHOWA ELECTRIC WIRE & CA-**
**BLECO. LTD.) 24.01.1986**

(73) Patentinhaber : **Dr. Johannes Heidenhain**
**GmbH**
**Dr.-Johannes-Heidenhain-Strasse 5 Postfach**
**1260**
**W-8225 Traunreut (DE)**

(72) Erfinder : **Nelle, Günther, Dr.-Ing.**
**Eichenweg 12**
**W-8221 Bergen (DE)**
Erfinder : **Schmitt, Walter, Ing. (grad.)**
**Hochgernstrasse 22**
**W-8225 Traunreut (DE)**

## Beschreibung

Mit Positionsmeßeinrichtungen werden die Verlagerungen von Maschinen-Bauteilen gemessen. Bei Werkzeugmaschinen sind dies das Maschinenbett und der Maschinenschlitten. Aus der Literatur und aus der Praxis sind derartige Positionsmeßeinrichtungen hinlänglich bekannt. Sie arbeiten nach den unterschiedlichsten physikalischen Prinzipien. In feuchter Umgebung, beispielsweise in Bearbeitungszentren, ist die Funktion derartiger Positionsmeßeinrichtungen gefährdet, da sich Spritzwasser und/oder Kondensat auf den Bauteilen niederschlägt.

In der Praxis haben sich gekapselte Positionsmeßeinrichtungen bewährt, bei denen ein Längsschlitz im Gehäuse vorgesehen ist, durch den ein Mitnehmer hindurch greift, der die Maschinenbewegungen auf die Meßeinrichtung überträgt. Dieser Längsschlitz ist mit Hilfe von elastischen Dichtlippen abgedichtet. Ein solche Positionsmeßeinrichtung ist aus der DE-U- 8536525 bekannt.

Durch feinste Lecks kann jedoch auch bei den bekannten Positionsmeßeinrichtungen Feuchtigkeit in den Innenraum derartiger Geräte eindringen und die Funktion gefährden.

Der Erfindung liegt die Aufgabe zugrunde, mit geringem baulichen Aufwand im Innenraum der Positionsmeßeinrichtung eine trockene Atmosphäre zu schaffen.

Diese Aufgabe wird durch eine gekapselte Positionsmeßeinrichtung mit den Merkmalen der Ansprüche 1 und/oder 6 gelöst.

Besonders vorteilhafte Ausgestaltungen der Erfindung sind in den jeweiligen abhängigen Ansprüchen angegeben.

Mit Hilfe von Ausführungsbeispielen wird die Erfindung anhand der Zeichnungen noch näher erläutert. Es zeigt;

Figur 1 eine herkömmlich mit Luft durchspülte Positionsmeßeinrichtung,

Figur 2 eine Positionsmeßeinrichtung mit gemeinsamer Anschlußleitung für elektrische Energie und Spülmedium,

Figur 3 eine Variante der Positionsmeßeinrichtung gemäß Figur 2,

Figur 4 eine Positionsmeßeinrichtung mit Lüfter in einer Montagevorrichtung,

Figur 5 eine Positionsmeßeinrichung mit Lüfter im Gehäuse und

Figur 6 eine Positionsmeßeinrichtung mit geschlossenem Medienkreislauf.

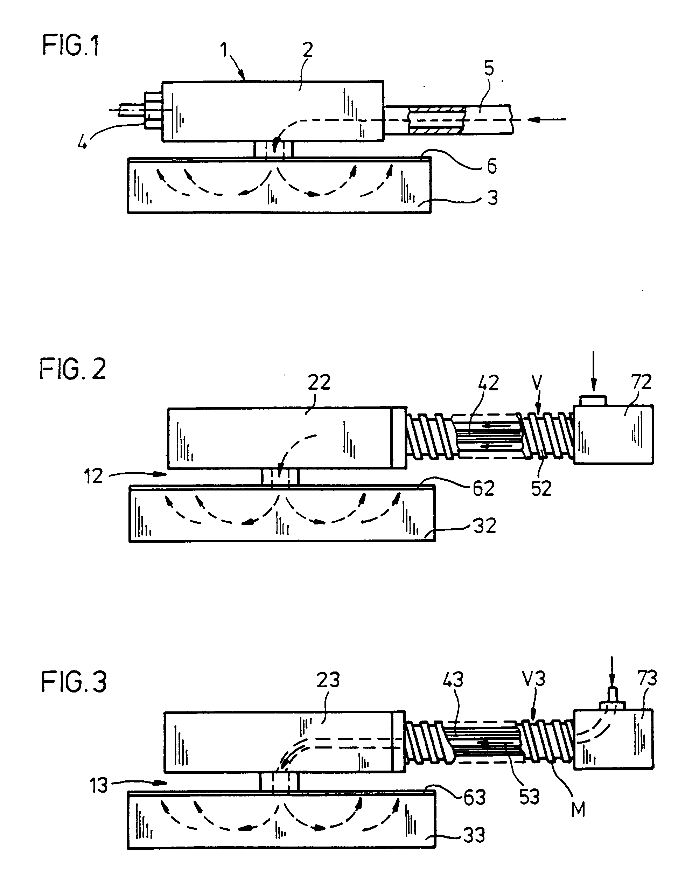

In Figur 1 ist der Stand der Technik dargestellt, aus dem es bekannt ist, Positionsmeßeinrichtungen 1 mit trockener Luft durchzuspülen. An einem Montagefuß 2, der mit einer in einem Gehäuse 3 untergebrachten Abtasteinrichtung (nicht gezeigt) in Verbindung steht, sind elektrische Anschlußleitungen 4 und ein Druckluftanschluß 5 angebracht. Im Gehäuse befindet sich ein Längsschlitz, der mit elastischen Dichtlippen 6 abgedichtet ist. Durch Lecks zwischen den Dichtlippen 6 kann die Luft das Gehäuse 3 wieder verlassen. Die strömende Luft ist mit Pfeilen symbolisiert. Mit der Luft wird die Feuchte aus der Positionsmeßeinrichtung entfernt.

Figur 2 zeigt eine Positionsmeßeinrichtung 12 nach der Erfindung. Da die nicht dargestellte Abtasteinrichtung mit elektrischer Energie versorgt werden muß, und weil die Meßsignale, die von der Abtasteinrichtung geliefert werden, an eine Auswerteeinrichtung 72 weitergeleitet werden müssen, sind elektrische Anschlußleitungen erforderlich. Eine Anschlußleitung für die trockene Luft ist ebenfalls erforderlich. Erfindungsgemäß wird deshalb eine gemeinsame Anschlußleitung V vorgesehen. Die Anschlußleitung V weist in ihrem Zentrum Kabel 42 für die elektrische Ver- und Entsorgung auf. Um vor Beschädigungen zu schützen, umgibt ein flexibler Metallschutzschlauch 52 die Kabel 42. Duch den Zwischenraum zwischen Kabel 42 und Metallschutzschlauch 52 kann trockene Luft ins Innere eines Gehäuses 32 strömen und dort an Dichtlippen 62 wieder austreten.

In der Auswerteeinrichtung 72 kann ein Drucklufterzeuger vorgesehen sein, oder die trockene Luft wird der Auswerteeinrichtung 72 von außen zugeführt, um von dort über die gemeinsame Anschlußleitung V in die Positionsmeßeinrichtung 12 geleitet zu werden.

Bei dem Ausführungsbeispiel in Figur 3 sind die einzelnen Bauelemente mit um die Figurenbezifferung ergänzten Bezugszeichen versehen. In der gemeinsamen Anschlußleitung V3 ist ein zusätzlicher Schlauch 53 für die trockene Luft im Leitungsinnern vorgesehen. Dieser Schlauch ist wie eine der elektrischen Leitungen 43 anzusehen und sozusagen Bestandteil des Kabelbaumes, der von einem Metallschutzschlauch M umgeben ist. Die Zufuhr von trokkener Luft erfolgt in der Weise, wie zu Figur 2 bereits beschrieben ist.

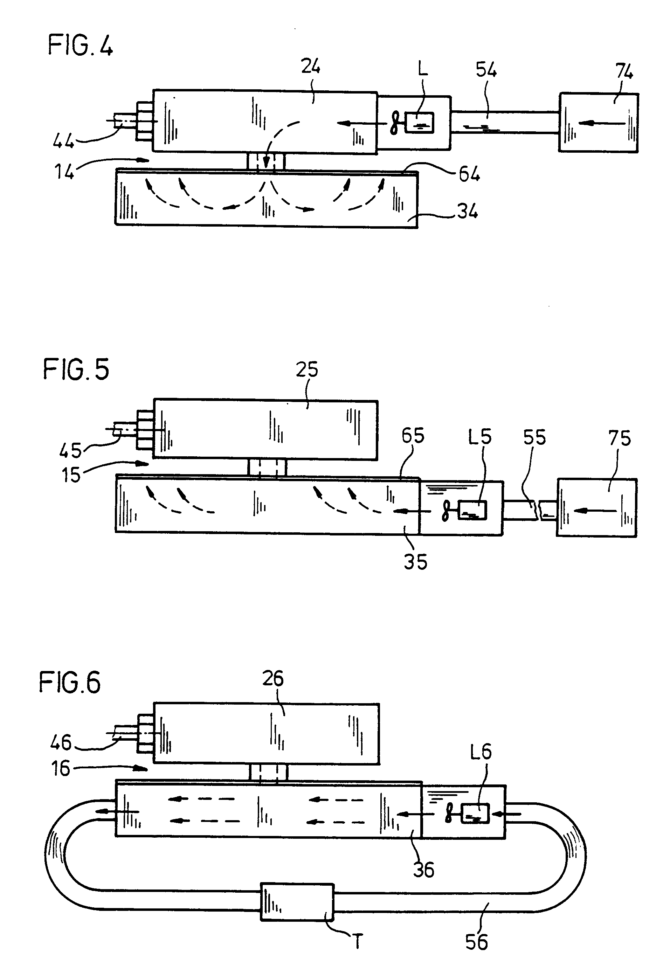

In Figur 4 ist eine Positionsmeßeinrichtung 14 beschrieben, bei der in der Montagevorrichtung 24 ein Kleinlüfter L vorgesehen ist, der aus einem Behälter 74 trockene Luft ansaugt und durch die Meßeinrichtung 14 bläst. Der Austritt erfolgt wiederum durch die elastischen Dichtlippen 64 des Gehäuses 34.

Gemäß Figur 5 ist der Kleinlüfter L5 im Gehäuse 35 integriert, saugt trockene Luft aus einem Behälter 75 an und bläst sie durch das Gehäuse 35 und die Dichtlippen 65 nach außen.

Es versteht sich, daß abweichend von der gezeigten Lösung die Luft auch an anderer Stelle das Gehäuse

2

verlassen könnte, beispielsweise an einer der Stirnseiten.

Ferner liegt es im Rahmen der Erfindung, auch bei den Ausführungsbeispielen mit Kleinlüfter eine gemeinsame Anschlußleitung für Elekrizität und Luft vorzusehen.

Beim Beispiel aus Figur 6 verfügt die Positionsmeßeinrichtung 16 über ein geschlossenes Kreislaufsystem 56, in dem mit Hilfe des Kleinlüfters L6 ständig trockene Luft zirkuliert. Durch eine Trokkeneinrichtung (Feuchtetauscher, Silicagel-Kapsel oder dgl.) wird der Luft die Feuchtigkeit entzogen, die sie beim Durchströmen der Positionsmeßeinrichtung 16 aufnimmt.

Besonders vorteilhaft ist es, als Medium zum Durchspülen der Positionsmeßeinrichtung trockenen Stickstoff zu verwenden, der in handelsüblichen Gasflaschen zur Verfügung steht.

## Patentansprüche

1. Gekapselte Positionsmeßeinrichtung mit einem von einem trockenen Medium durchspülten Innenraum und Anschlußleitungen für elektrische Energie und das Medium, dadurch gekennzeichnet, daß für die Versorgung mit dem trockenen Medium und die elektrische Energie eine gemeinsame Anschlußleitung (V, V3) vorhanden ist.

2. Gekapselte Positionsmeßeinrichtung nach Anspruch 1, dadurch gekennzeichnet, daß die gemeinsame Anschlußleitung (V, V3) mehrere Leitungen (43, 53) beinhaltet, von denen wenigstens eine als Leitung (53) für das trockene Medium ausgebildet ist.

3. Gekapselte Positionsmeßeinrichtung nach Anspruch 1, dadurch gekennzeichnet, daß die Anschlußleitung nach Art eines Koaxialkabels (V, V3) ausgeführt ist.

4. Gekapselte Positionsmeßeinrichtung nach Anspruch 3, dadurch gekennzeichnet, daß im Zentrum des Koaxialkabels (V) die elektrischen Leitungen (42) verlaufen.

5. Gekapselte Positionsmeßeinrichtung nach Anspruch 3, dadurch gekennzeichnet, daß im Zentrum des Koaxialkabels (V3) die Leitung (53) für das trockene Medium verläuft.

6. Gekapselte Positionsmeßeinrichtung mit einem von einem trockenen Medium durchspülten Innenraum, und Anschlußleitungen für elektrische Energie und das Medium, dadurch gekennzeichnet, daß die Spülung mit dem trockenen Medium mit Hilfe eines in die Positionsmeßeinrichtung (14, 15) integrierten Lüfters (L, L5) erfolgt.

7. Gekapselte Positionsmeßeinrichtung nach Anspruch 6, dadurch gekennzeichnet, daß der Lüfter (L) in einer Abtasteinrichtung oder deren Montagevorrichtung (24) integriert ist.

8. Gekapselte Positionsmeßeinrichtung nach Anspruch 6, dadurch gekennzeichnet, daß der Lüfter (L5) im Gehäuse (35) der Positionsmeßeinrichtung (15) integriert ist.

9. Gekapselte Positionsmeßeinrichtung nach Anspruch 6, dadurch gekennzeichnet, daß der Lüfter über eine gemeinsame Anschlußleitung für elektrische Energie und das Medium verfügt.

10. Gekapselte Positionsmeßeinrichtung nach Anspruch 6, dadurch gekennzeichnet, daß der Lüfter (L6) in einem geschlossenen Medienkreislauf (56) angeordnet ist, und daß der Medienkreislauf (56) eine Trockeneinrichtung (T) für das Medium aufweist.

11. Gekapselte Positionsmeßeinrichtung nach Anspruch 10, dadurch gekennzeichnet, daß die Trockeneinrichtung ein Feuchtetauscher ist.

12. Gekapselte Positionsmeßeinrichtung nach Anspruch 1Ø, dadurch gekennzeichnet, daß die Trockeneinrichtung wenigstens eine Silicagel-Kapsel ist.

13. Gekapselte Positionsmeßeinrichtung nach Anspruch 1 oder 6, dadurch gekennzeichnet, daß das trockene Medium Luft ist.

14. Gekapselte Positionsmeßeinrichtung nach Anspruch 1 oder 6, dadurch gekennzeichnet, daß das Medium trockener Stickstoff ist.

## Claims

1. A fully enclosed position-measuring device having an internal space through which a dry medium circulates, and connector leads for electrical energy and the said medium, characterised in that a common connector lead (V, V3) is provided in order to supply the dry medium and the electrical energy.

2. A fully enclosed position-measuring device according to Claim 1, characterised in that the common connector lead (V, V3) contains a plurality of conduits (43, 53), of which at least one is designed as a conduit (53) for the dry medium.

3. A fully enclosed position-measuring device according to claim 1, characterised in that the connector lead is constructed in the manner of a coaxial cable (V, V3).

4. A fully enclosed position-measuring device according to Claim 3, characterised in that the electrical conduits (42) run in the centre of the coaxial cable (V).

5. A fully enclosed position-measuring device according to Claim 3, characterised in that the conduit (53) for the dry medium runs in the centre of the coaxial cable (V3).

6. A fully enclosed position-measuring device having an internal space through which a dry medium circulates, and connector leads for electrical energy and the said medium, characterised in that circulation of the dry medium is effected with the help of a blower (L, L5) integrated into the position-measuring device (14, 15).

7. A fully enclosed position-measuring device according to Claim 6, characterised in that the blower (L) is integrated into a scanner or into its mounting device (24).

8. A fully enclosed position-measuring device according to Claim 6, characterised in that the blower (L5) is integrated into the casing (35) of the position-measuring device (15).

9. A fully enclosed position-measuring device according to Claim 6, characterised in that the fan has a common connector lead for electrical energy and the medium.

10. A fully enclosed position-measuring device according to Claim 6, characterised in that the fan (L6) is disposed in an enclosed medium circuit (56), and in that the medium circuit (56) comprises a drying device (T) for the medium.

11. A fully enclosed position-measuring device according to Claim 10, characterised in tha the druing device is a humidity-exchanger.

12. A fully enclosed position-measuring device according to Claim 10, characterised in that the drying device is at least a silica gel capsule.

13. A fully enclosed position-measuring device according to Claim 1 or 6, characterised in that the dry medium is air.

14. A fully enclosed position-measuring device according to Claim 1 or 6, characterised in that the medium is dry nitrogen.


## Revendications

1. Dispositif de mesure de position étanche comportant une chambre intérieure dans laquelle circule un fluide sec et des conduites de raccordement pour l'énergie électrique et le fluide, caractérisé en ce qu'il est prévu une conduite commune (V, V3) pour l'alimentation en fluide sec et en énergie électrique.

2. Dispositif de mesure de position étanche selon la revendication 1, caractérisé en ce que la conduite de raccordement commune (V, V3) contient plusieurs conduites (43, 53) dont l'une au moins est agencée en conduite (53) pour le fluide sec.

3. Dispositif de mesure de position étanche selon la revendication 1, caractérisé en ce que la conduite de raccordement est agencée à la manière d'un câble coaxial (V, V3).

4. Dispositif de mesure de position étanche selon la revendication 3, caractérisé en ce que les conduites électriques (42) passent au centre du câble coaxial (V).

5. Dispositif de mesure de position étanche selon la revendication 3, caractérisé en ce que la conduite (53) pour le fluide sec passe au centre du câble coaxial (V3)

6. Dispositif de mesure de position étanche comportant une chambre intérieure dans laquelle circule un fluide sec et des conduites de raccordement pour l'énergie électrique et le fluide, caractérisé en ce que la circulation du fluide sec est obtenue à l'aide d'une soufflante (L, L5) intégrée dans le dispositif de mesure de position (14, 15).

7. Dispositif de mesure de position étanche selon la revendication 6, caractérisé en ce que la soufflante (L) est intégrée dans une unité de lecture ou dans son dispositif de montage (24).

8. Dispositif de mesure de position étanche selon la revendication 6, caractérisé en ce que la soufflante (L5) est intégrée dans le boîtier (35) du dispositif de mesure de position (15).

9. Dispositif de mesure de position étanche selon la revendication 6, caractérisé en ce que la soufflante est munie d'une conduite de raccordement commune pour l'énergie électrique et le fluide.

10. Dispositif de mesure de position étanche selon la revendication 6, caractérisé en ce que la soufflante (L6) est intercalée dans un circuit de fluide (56) fermé et en ce que le circuit de fluide (56) comporte un dispositif de séchage (T) pour le fluide.

11. Dispositif de mesure de position selon la revendication 10, caractérisé en ce que le dispositif de séchage est un dessicateur.

12. Dispositif de mesure de position selon la revendication 10, caractérisé en ce que le dispositif de séchage est au moins une capsule de silicagel.

13. Dispositif de mesure de position selon la revendication 1 ou 6, caractérisé en ce que le fluide sec est de l'air.

14. Dispositif de mesure de position selon la revendication 1 ou 6, caractérisé en ce que le fluide est de l'azote séché.

FIG.1

FIG. 2

FIG.3

FIG.4

FIG.5

FIG.6